# FASCICULE DE BREVET EUROPEEN

(11) **EP 0 504 082 B1**
(45) Date de publication et mention de la délivrance du brevet: **11.09.1996**
(21) Numéro de dépôt: 92460007.5
(22) Date de dépôt: 28.02.1992
(51) Int. Cl.: H04L 12/56

(54) **Dispositif de déclenchement de temporisations multiples**
Anordnung zur Auslösung mehrfacher Zeitnahmeeinrichtungen
Arrangement for triggering multiple timers

(30) Priorité: 13.03.1991 FR 9103284
(43) Date de publication de la demande: 16.09.1992
(73) Titulaire: FRANCE TELECOM, F-75015 Paris (FR)
(72) Inventeur: Servel, Michel, F-22300 Lannion (FR); Boyer, Pierre, F-22300 Lannion (FR); Tranchier, Didier, F-22560 Plemeur-Bodou (FR)
(74) Mandataire: Le Guen, Louis François

(56) Documents cités:
- GB-A- 1 427 319
- COMPUTER COMMUNICATION REVIEW, vol. 20, no. 4, septembre 1990, pages 19-29, New York, US; L. ZHANG: "VirtualClock: A new traffic control algorithm for packet switching networks"
- IEEE JOURNAL ON SELECTED AREAS IN COMMUNICATIONS, vol. SAC-5, no. 8, octobre 1987, pages 1315-1326; M.G.H. KATEVENIS: "Fast switching and fair control of congested flow in broadband networks"

## Description

La présente invention concerne un dispositif de déclenchement de temporisations multiples qui est utilisé dans un système de communication à commutation temporelle asynchrone pour, à l'arrivée d'une cellule à l'entrée dudit dispositif de temporisation, déclencher un processus de temporisation dont la durée est liée à une caractéristique de la cellule entrante et pour, à l'expiration de cette durée de temporisation, déclencher une action liée à une seconde caractéristique de la cellule qui a enclenché le processus de temporisation.

Un tel dispositif de temporisation peut rencontrer de nombreuses applications, en particulier lors de la mise en oeuvre de certains protocoles de communication par cellules (v. par exemple GB-A-1427319).

Un processus de temporisation peut être mis en oeuvre au moyen d'un compteur dont on initialise le compte à l'arrivée d'un événement et dont on décrémente ce compte à chaque impulsion de durée élémentaire d'une horloge. Pour réaliser plusieurs processus simultanément, on doit donc disposer d'autant de compteurs qu'il y a de processus à traiter. On conçoit que, pour un nombre de processus de temporisation élevé, plusieurs milliers par exemple, le nombre de compteurs à mettre en oeuvre devient vite rédhibitoire.

Une autre solution consiste à utiliser une mémoire comportant plusieurs zones adressables dans lesquelles sont respectivement stockées les durées de différentes temporisations. A chaque temps élémentaire d'une horloge, on décrémente le contenu de chaque zone et on déclenche une action déterminée lorsque ce contenu devient nul. Pour un nombre de processus de temporisation élevé, le temps passé à décrémenter chaque zone de la mémoire devient trop important. Par ailleurs, il n'est pas facile de lier l'action engendrée à l'expiration d'une temporisation au processus qui l'a déclenchée.

Le but de la présente invention est de pallier ces inconvénients et de fournir un dispositif qui permette d'engendrer un nombre élevé de processus de temporisation simultanément sans que le temps passé à la gestion de l'ensemble de ces processus ne soit trop élevé. Le but de la présente invention est également de prévoir un dispositif dont l'action engendrée à l'expiration d'une temporisation est liée au processus qui l'a déclenchée.

A cet effet, un dispositif selon l'invention comporte une mémoire de temporisation du type mémoire vive à accès aléatoire ayant une pluralité de zones adressables où sont normalement stockés des multiplets nuls ou inactifs, ladite mémoire comportant une entrée de données pour pouvoir stocker, dans une zone adressée en écriture, un paramètre lié à une caractéristique du circuit virtuel auquel appartient la cellule entrante qui est présente, à ce moment, sur son entrée, une sortie de données pour pouvoir délivrer le contenu de la zone de ladite mémoire adressée en lecture, ladite mémoire étant adressée alternativement en écriture par un multiplet délivré sur sa sortie par un additionneur à deux entrées, dont l'une est reliée à une base de temps pour y recevoir un multiplet représentatif de l'heure locale et dont l'autre reçoit un multiplet de durée de temporisation lié à une caractéristique du circuit virtuel auquel appartient la cellule entrante, et en lecture par ledit multiplet représentatif de l'heure locale, la présence sur la sortie de ladite mémoire d'un paramètre ayant pour résultat de déclencher une action alors que la présence d'un multiplet inactif n'engendre aucune action.

Selon une autre caractéristique de l'invention, il comporte un dispositif de détermination d'adresses disponibles comportant une entrée reliée à la sortie dudit additionneur et une sortie reliée à l'entrée d'adressage en écriture de ladite mémoire de temporisation, ledit dispositif délivrant, sur sa sortie, une adresse qui est, soit égale à l'adresse présente sur son entrée, soit égale à une adresse qui est la plus proche voisine de cette adresse et qui est telle qu'elle correspond à une zone disponible de la mémoire de temporisation dans laquelle aucun paramètre n'a été stocké.

Selon une autre caractéristique de l'invention, ledit paramètre stocké dans la zone adressée en écriture de ladite mémoire est le numéro du circuit virtuel auquel appartient ladite cellule entrante et qui est contenu dans l'étiquette de ladite cellule.

Selon une autre caractéristique de l'invention, le multiplet de durée de temporisation est délivré, sur sa sortie, par une mémoire de commande comportant autant de zones adressables que le système de communication peut gérer de circuits virtuels, chaque zone de ladite mémoire étant adressée en lecture par un paramètre caractéristique du circuit virtuel auquel appartient la cellule entrante présente sur son entrée d'adressage à ce moment pour pouvoir délivrer, sur la sortie de ladite mémoire, le multiplet de temporisation correspondant.

Selon une autre caractéristique de l'invention, ledit paramètre qui adresse ladite mémoire de commande est le numéro de circuit virtuel auquel appartient ladite cellule entrante.

Selon une autre caractéristique de l'invention, ledit paramètre qui est stocké dans la zone adressée en écriture de ladite mémoire de temporisation est une donnée stockée dans une zone de ladite mémoire de commande à l'adresse correspondant à un numéro de circuit virtuel donné.

Selon une autre caractéristique de l'invention, le multiplet de durée de temporisation est chargé, par une unité de commande, dans une zone de ladite mémoire de commande dont l'adresse est égale au numéro de circuit virtuel correspondant.

Selon une autre caractéristique de l'invention, la mémoire de commande délivre, sur sa sortie, pour chaque zone adressée, un bit de validation qui est fourni à une entrée de commande de la mémoire de temporisation, soit pour autoriser l'écriture dans ladite mémoire de temporisation lorsque ledit bit est actif, soit pour interdire cette écriture lorsque ledit bit est inactif.

Selon une autre caractéristique de l'invention, l'étiquette de la cellule entrante comprend un bit d'identification qui est fourni à une entrée de la mémoire de temporisation, soit pour autoriser l'écriture dans-cette mémoire lorsque ledit bit est actif, soit pour interdire cette écriture lorsque ledit bit est inactif.

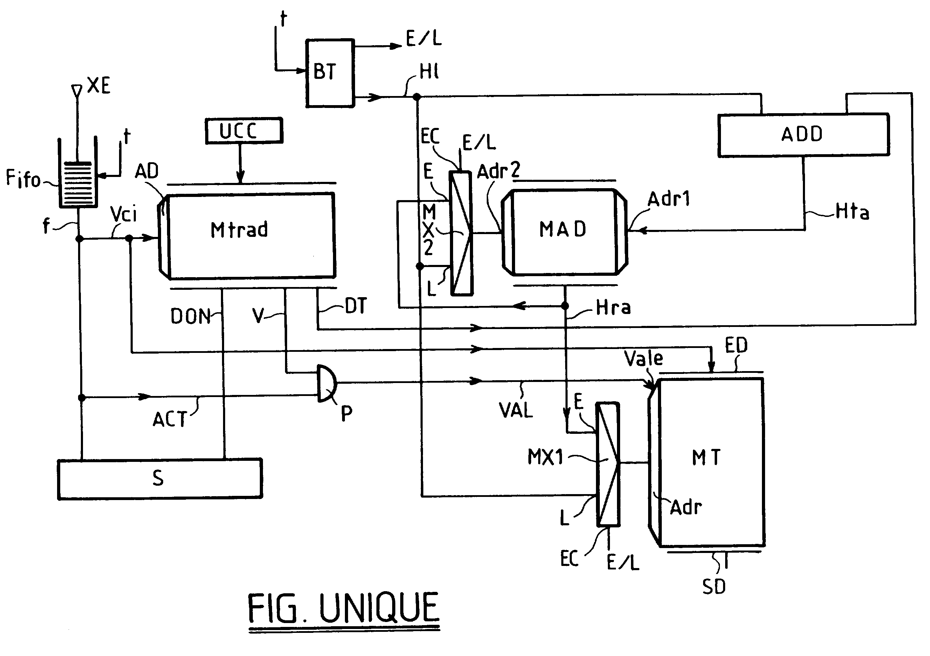

Les caractéristiques de l'invention mentionnées ci-dessus, ainsi que d'autres, apparaîtront plus clairement à la lecture de la description suivante d'un exemple de réalisation, ladite description étant faite en relation avec le dessin joint dans lequel la Fig. unique montre un schéma synoptique d'un dispositif de déclenchement de temporisations multiples.

Le dispositif de déclenchement de temporisations multiples montré à cette Fig. comprend une file d'entrée FiFo, une mémoire de traduction Mtrad, une mémoire d'adresses disponibles MAD et une mémoire de temporisation MT.

La file FiFo reçoit, sur son entrée, un multiplex rentrant XE qui est, par exemple, un multiplex temporel asynchrone du type de celui qui est décrit dans le document EP-A-108 208. Chaque cellule délivrée par la file FiFo, appelée par la suite cellule entrante, est synchrone de l'horloge locale t du système et est présentée sur un faisceau de plusieurs fils f dont seize portent les seize bits de l'étiquette Vci identifiant le circuit virtuel qui achemine cette cellule et, par conséquent, la communication concernée. Dans le faisceau de fils f à la sortie de la file Fifo, se trouve également un fil qui porte un bit d'identification ACT de cellule qui est actif pour les cellules qui peuvent déclencher un processus de temporisation donnée.

La mémoire Mtrad est une mémoire vive du type à accès aléatoire comportant autant de zones adressables que de communications différentes que peut traiter le système. Une mémoire de ce type ainsi que son fonctionnement sont, par exemple, décrits dans le document FR-A-2 538 976 sous la référence MC. La mémoire Mtrad reçoit, sur son entrée d'adressage AD, l'étiquette Vci de la cellule entrante. A chaque communication et donc à chaque circuit virtuel mis en jeu, correspond une zone adressable de la mémoire Mtrad. Chaque zone adressable contient différentes données concernant, par exemple, l'acheminement ultérieur des cellules. Ces données sont fournies, à la mémoire Mtrad, par une unité de commande UCC.

Parmi ces données, on a prévu, pour chaque zone adressable de la mémoire Mtrad, un bit V de validation servant, comme on le verra ultérieurement, à confirmer ou à empêcher le déclenchement de l'opération de temporisation par les cellules appartenant au circuit virtuel correspondant à cette zone, ainsi qu'un multiplet Dt représentatif de la durée de cette temporisation. Chaque bit V et chaque multiplet Dt sont également fournis à la mémoire Mtrad par l'unité de commande UCC.

Pour les circuits virtuels dont aucune cellule ne doit déclencher l'opération de temporisation, le bit de validation V est rendu inactif et le multiplet Dt est, par exemple, égal au multiplet nul.

La mémoire Mtrad fournit également, sur sa sortie, pour chaque étiquette Vci qui l'adresse, des données DON concernant le circuit virtuel correspondant. Ces données DON ainsi que les bits portés par le faisceau de fils f sont fournis à un système S qui peut être, par exemple, un système de commutation temporelle, tel que celui qui est décrit dans le document FR-A-2 538 976.

Une porte logique P de type ET reçoit respectivement sur ses deux entrées, d'une part, le fil portant le bit d'identification ACT des cellules concernées par l'opération de temporisation et, d'autre part, le bit V de validation. Elle délivre, en sortie, un bit VAL qui est actif lorsque les deux bits ACT et V sont simultanément actifs.

Une base de temps BT pilotée par le signal d'horloge t du système délivre un multiplet Hl représentatif de l'heure locale. A chaque temps élémentaire de signal d'horloge t, le multiplet Hl est incrémenté d'une unité. Ainsi, à chaque nouvelle cellule entrante émise par la file Fifo, correspond une nouvelle valeur du multiplet Hl.

La base de temps BT engendre également un signal à deux niveaux E/L dont la période est celle du signal d'horloge t.

Un additionneur ADD a une première entrée reliée à la base de temps BT pour y recevoir le multiplet Hl et une seconde entrée reliée à la sortie de la mémoire Mtrad pour y recevoir le multiplet de durée de temporisation Dt auquel est affecté le circuit virtuel de la cellule entrante. Il délivre, sur sa sortie, un multiplet Hta représentatif de l'heure locale Hl additionnée de la durée de temporisation Dt. On verra, par la suite, que le multiplet Hta est représentatif de l'heure théorique à laquelle devrait avoir lieu l'expiration du processus de temporisation déclenché par la cellule entrante à l'heure Hl.

La mémoire de temporisation MT est une mémoire vive du type à accès aléatoire dont les zones adressables contiennent normalement un multiplet nul ou inactif. Lorsqu'une zone adressable de la mémoire MT contient un tel multiplet, cette zone est dite disponible pour l'écriture d'une donnée. La mémoire MT comporte une entrée de données ED reliée à la sortie de la file Fifo pour y recevoir l'étiquette Vci de la cellule entrante. Elle comporte une entrée d'adressage Adr qui est reliée à la sortie d'un multiplexeur MX1 dont une première entrée L est reliée à la base de temps BT pour y recevoir le multiplet Hl et dont une seconde entrée E est reliée à la sortie de la mémoire MAD pour y recevoir un multiplet Hra décrit ci-après. Le multiplexeur MX1 comporte encore une entrée de commande EC qui est pilotée par le signal E/L engendré par la base de temps BT. Lorsque le signal E/L est actif, le multiplexeur MX1 délivre, sur l'entrée d'adressage Adr de la mémoire MT, le multiplet Hra issu de la mémoire MAD, alors que lorsqu'il est inactif, il délivre le multiplet Hl issu de la base de temps BT.

La mémoire MT comporte également une sortie de données SD pour délivrer le contenu de la zone adressée en lecture.

Lorsque la mémoire MT est adressée en lecture, le contenu de la case correspondante est transféré sur la sortie SD et est réinitialisé à une valeur nulle ou inactive.

La mémoire MT comporte encore une entrée de validation d'écriture Vale qui est reliée à la sortie de la porte ET et qui reçoit ainsi le bit de validation VAL. Quand cette entrée est activée, l'écriture de l'étiquette Vci dans la zone de la mémoire MT adressée par la sortie du multiplexeur MX1 peut être effectuée alors que cette opération est inhibée lorsqu'elle n'est pas activée.

La mémoire MAD est une mémoire vive à accès aléatoire comportant autant de cases que la mémoire MT, chaque case ayant une capacité de un bit et correspondant biunivoquement à une zone adressable de la mémoire MT. Elle dispose d'une première entrée Adr1 à laquelle est reliée la sortie de l'additionneur ADD, d'une seconde entrée Adr2 à laquelle est reliée la sortie d'un multiplexeur MX2 et d'une sortie reliée à une entrée du multiplexeur MX1 pour lui fournir le multiplet Hra. Le multiplexeur MX2 a une première entrée E qui est reliée à la sortie de la mémoire MAD et une seconde entrée L qui est reliée à la sortie de la base de temps BT pour y recevoir le multiplet d'horloge locale Hl. Il dispose d'une entrée de commande pilotée par le signal E/L de la base de temps BT. Lorsque cette entrée est activée, le signal de sortie de la mémoire MAD se retouve sur l'entrée Adr2 alors que lorsqu'elle est inactive, c'est le multiplet Hl qui se retrouve sur l'entrée Adr2.

La mémoire MAD explore une à une ses propres cases et, ce, à partir du multiplet Hta présent sur son entrée Adr1 et délivre, en sortie, un multiplet Hra donnant l'adresse d'une zone de la mémoire MT à laquelle correspond la première case inactive trouvée lors de cette exploration. A ce moment, le multiplexeur MX2 a son entrée qui est commandée par le signal E/L actif et fournit alors à l'entrée Adr2 de la mémoire MAD le multiplet Hra. La mémoire MAD rend active la case correspondante montrant par là l'occupation de la zone de la mémoire MT à cette adresse.

Lorsque le signal E/L devient inactif, le multiplexeur MX2 délivre le multiplet Hl sur l'entrée Adr2 de la mémoire MAD, ce qui a pour effet de désactiver la case de la mémoire MAD correspondante. Notons que cette opération a lieu lors de la lecture de la zone de la mémoire MT adressée par le même multiplet Hl, cette lecture rendant disponible cette zone.

En général, la première case inactive trouvée par l'exploration de la mémoire MAD correspond à une adresse égale ou légèrement supérieure au multiplet Hta sur l'entrée d'adressage Adr1 si bien que la mémoire MAD délivre, sur sa sortie, une adresse Hra peu différente de l'adresse Hta. Ceci est d'autant plus vrai que le nombre de zones adressables de la mémoire MT est important.

Le fonctionnement du dispositif de déclenchement de temporisations multiples est le suivant.

A un instant t, une cellule est délivrée en sortie de la file Fifo, son étiquette adresse la mémoire Mtrad et celle-ci délivre alors sur sa sortie le bit de validation V, le multiplet de durée de temporisation Dt et des données DON concernant le circuit virtuel auquel appartient cette cellule. Les données DON ne servent pas au dispositif de la présente invention et ne seront pas décrites.

Le multiplet de temporisation Dt est fourni à une entrée de l'additionneur ADD dans lequel sa valeur est additionnée à la valeur du multiplet Hl représentatif de l'heure locale. Sur sa sortie, l'additionneur délivre alors un multiplet Hta qui est représentatif de l'heure théorique à laquelle devrait être effectué, après expiration de la temporisation correspondante, un certain processus. Le multiplet Hta est fourni à l'entrée Adr1 de la mémoire MAD.

Supposons que la case de la mémoire MAD qui est ainsi adressée par le multiplet Hta soit inactive, c'est-à-dire que la zone de la mémoire MT correspondant à cette adresse soit disponible. Le multiplet Hra en sortie de la mémoire MAD correspond alors au multiplet Hta.

Le multiplet Hra est présent à l'entrée E du multiplexeur MX1. Dans une première phase, le signal E/L est actif, si bien que le multiplet Hra adresse la mémoire MAD pour une opération d'écriture. En même temps, le multiplet Hra est présent sur l'entrée Adr2 de la mémoire MAD pour activer la case correspondante et signifier l'occupation de la zone de la mémoire MT d'adresse égale à Hra.

L'opération d'écriture dans la mémoire MT est possible seulement si le bit de validation Vale est actif, c'est-à-dire si le bit V issu de la mémoire Mtrad et le bit d'identification ACT de la cellule entrante sont simultanément actifs. Si tel est le cas, l'étiquette de la cellule entrante, correspondant à l'identification du circuit virtuel auquel elle appartient, est stockée dans la zone de la mémoire MT dont l'adresse correspond au multiplet Hra. Cette adresse correspond en fait à l'heure réelle à laquelle aura lieu l'expiration du processus de temporisation déclenché par la cellule entrante.

La mémoire MAD permet d'éviter que les numéros de deux circuits virtuels puissent être stockés à la même adresse dans la mémoire MT. Au cas où un numéro de circuit virtuel a déjà été stocké, dans la mémoire MT, à l'adresse Hta calculée par l'additionneur ADD, la mémoire MAD détermine l'adresse disponible Hra la plus voisine de cette adresse calculée Hta et délivre cette adresse sur sa sortie en tant que multiplet Hra. Le processus d'écriture dans la mémoire MT est alors semblable à celui décrit ci-dessus.

Puis, dans une seconde phase, le signal E/L de commande des multiplexeurs MX1 et MX2 devient inactif. Le multiplet Hl adresse alors la mémoire MT en lecture et celle-ci délivre, sur sa sortie SD, soit un numéro de circuit virtuel qui a été préalablement stocké, soit un multiplet nul ou inactif. De plus, la case adressée en lecture est chargée avec un multiplet nul ou inactif. La présence sur la sortie SD de la mémoire MT d'un numéro de circuit virtuel Vci a pour effet de déclencher un processus dont le mécanisme n'est pas décrit ici car ne faisant pas partie de la présente invention. Précisons néanmoins que l'action de ce processus peut être liée au numéro du circuit virtuel stocké dans la mémoire MT.

Si la mémoire MT délivre un multiplet nul ou inactif, aucune action n'est engendrée.

Le fait de rendre nulle ou inactive la case qui a été adressée en lecture évite qu'un même processus soit déclenché une seconde fois dans le cycle suivant de la mémoire MT.

Lors de cette phase, le multiplet Hl se retrouve à l'entrée Adr2 de la mémoire MAD pour désactiver la case correspondant à cette adresse.

Le multiplet Hl est alors incrémenté d'une unité par la base de temps BT. Une nouvelle cellule entrante est émise par la file Fifo et un nouveau cycle tel que celui que l'on vient de décrire peut recommencer.

On a décrit un dispositif de déclenchement de temporisations multiples dont l'entrée de la mémoire de temporisation reçoit le numéro de circuit virtuel auquel appartient la cellue entrante. En fait, dans la mémoire MT, on peut aussi stocker une donnée telle que la donnée DON, préalablement stockée dans la mémoire Mtrad à une adresse correspondant à un numéro de circuit virtuel. De cette manière, il est possible de mémoriser dans la mémoire de temporisation MT tout paramètre lié à une caractéristique du circuit virtuel auquel appartient la cellule existante.

## Revendications

1. Dispositif de déclenchement de temporisations multiples comportant une entrée à laquelle est fournie, à chaque temps élémentaire d'une horloge, une cellule d'un système de communication à commutation temporelle asynchrone, dite cellule entrante, ladite cellule appartenant à un circuit virtuel de communication portant un numéro qui est stocké dans l'étiquette de ladite cellule, caractérisé en ce qu'il comporte une mémoire de temporisation (MT) du type mémoire vive à accès aléatoire ayant une pluralité de zones adressables où sont normalement stockés des multiplets nuls ou inactifs, ladite mémoire (MT) comportant une entrée de données (ED) pour pouvoir stocker, dans une zone adressée en écriture, un paramètre lié à une caractéristique du circuit virtuel auquel appartient la cellule entrante qui est présente, à ce moment, sur son entrée, une sortie de données (SD) pour pouvoir délivrer le contenu de la zone de ladite mémoire adressée en lecture, ladite mémoire (MT) étant adressée alternativement en écriture par un multiplet (Hta, Hra) délivré par un additionneur (ADD) à deux entrées, dont l'une est reliée à une base de temps (BT) pour y recevoir un multiplet (Hl) représentatif de l'heure locale et dont l'autre reçoit un multiplet de durée de temporisation (Dt) lié à une caractéristique du circuit virtuel auquel appartient la cellule entrante, et en lecture par ledit multiplet (Hl) représentatif de l'heure locale, la présence sur la sortie (SD) de ladite mémoire (MT) d'un paramètre ayant pour résultat de déclencher une action alors que la présence d'un multiplet inactif n'engendre aucune action.

2. Dispositif selon la revendication 1, caractérisé en ce qu'il comporte un dispositif de détermination d'adresses disponibles (MAD) comportant une entrée (Adr1) reliée à la sortie dudit additionneur (ADD) et une sortie reliée à l'entrée d'adressage en écriture de ladite mémoire de temporisation (MT), ledit dispositif délivrant, sur sa sortie, une adresse (Hra) qui est égale, soit à l'adresse (Hta) présente sur son entrée (Adr1), soit à une adresse voisine la plus proche de ladite adresse (Hta) et qui est telle qu'elle correspond à une zone de la mémoire de temporisation (MT) dans laquelle aucun paramètre n'a été stocké.

3. Dispositif selon la revendication 1 ou 2, caractérisé en ce que ledit paramètre stocké dans la zone adressée en écriture de ladite mémoire (MT) est le numéro du circuit virtuel (Vci) auquel appartient ladite cellule entrante et qui eut contenu dans l'étiquette de ladite cellule.

4. Dispositif selon une des revendications précédentes, caractérisé en ce que le multiplet de durée de temporisation (Dt) est délivré, sur sa sortie, par une mémoire de commande (Mtrad) comportant autant de zones adressables que le système de communication peut gérer de circuits virtuels, chaque zone de ladite mémoire (Mtrad) étant adressée en lecture par un paramètre caractéristique du circuit virtuel auquel appartient la cellule entrante présente sur son entrée d'adressage à ce moment pour pouvoir délivrer, sur la sortie de ladite mémoire, le multiplet de temporisation (Dt) correspondant.

5. Dispositif selon la revendication 4, caractérisé en ce que ledit paramètre qui adresse ladite mémoire de commande (Mtrad) est le numéro du circuit virtuel auquel appartient ladite cellule entrante.

6. Dispositif selon la revendication 4 ou 5, caractérisé en ce que ledit paramètre qui est stocké dans la zone adressée en écriture de la mémoire de temporisation (MT) est une donnée stockée dans une zone de ladite mémoire de commande (Mtrad) à une adresse correspondant à un numéro de circuit virtuel donné.

7. Dispositif selon la revendication 4, 5 ou 6, caractérisé en ce que le multiplet de durée de temporisation (Dt) est chargé, par une unité de commande (UCC), dans une zone de ladite mémoire de commande (Mtrad) dont l'adresse est égale au numéro de circuit virtuel correspondant.

8. Dispositif selon une des revendications 4 à 7, caractérisé en ce que la mémoire de commande (Mtrad) délivre, sur sa sortie, pour chaque zone adressée, un bit de validation (V) qui est fourni à une entrée de commande (Vale) de la mémoire de temporisation (MT), soit pour autoriser l'écriture dans ladite mémoire de temporisation (MT) lorsque ledit bit est actif, soit pour interdire cette écriture lorsqu'il eut inactif.

9. Dispositif selon une des revendications précédentes, caractérisé en ce que l'étiquette (Vci) de la cellule entrante comprend un bit d'identification (ACT) qui est fourni à une entrée de la mémoire de temporisation (Vale), soit pour autoriser l'écriture dans cette mémoire (MT) lorsque ledit bit est actif, soit pour interdire cette écriture lorsqu'il est inactif.

## Patentansprüche

1. Anordnung zur Auslösung mehrfacher Verzögerungseinrichtungen, enthaltend einen Eingang, an den zu jeder Grundzeit eines Taktgebers eine Zelle eines Nachrichtenübertragungssystems zur zeitlich asynchronen Umschaltung geliefert wird, Eingangs-Zelle genannt, die zu einer virtuellen Nachrichtenübertragungsschaltung gehört, die eine Nummer trägt, die in dem Etikett dieser Zelle gespeichert ist, dadurch gekennzeichnet, daß sie einen Verzögerungs-Speicher (MT) vom Vive-Typ mit willkürlichem Zugriff enthält, der eine Vielzahl adressierbarer Zonen besitzt, in denen normalerweise Null- oder inaktive Multipletts gespeichert sind, wobei der Speicher (MT) einen Dateneingang (ED) enthält, um in einer zum Einschreiben adressierten Zone einen Parameter speichern zu können, der mit einem Merkmal des virtuellen Schaltkreises verknüpft ist, zudem die Eingangs-Zelle gehört, die in diesem Moment an seinem Eingang vorhanden ist, einen Datenausgang (SD), um den Inhalt der zum Lesen adressierten Zone des Speichers ausgeben zu können, wobei der Speicher (MT) alternativ durch ein Multiplett (Hta, Hra) zum Einschreiben adressiert wird, das von einem Addierer (ADD) mit zwei Eingängen geliefert wird, dessen einer mit einer Zeitbasis (BT) verbunden ist, um dort ein der Ortszeit entsprechendes Multiplett (Hl) zu empfangen, und dessen anderer Eingang ein Multiplett (Dt) mit der Dauer der Verzögerung empfängt, das mit einem Merkmal des virtuellen Schaltkreises verknüpft ist, zu dem die Eingangs-Zelle gehört, und wobei der Speicher zum Lesen adressiert wird durch das der Ortszeit entsprechende Multiplett (H1), wobei die Anwesenheit eines Parameters am Ausgang (SD) des Speichers (MT) dazu führt, eine Aktion auszulösen, während die Anwesenheit eines inaktiven Multipletts keine Aktion auslöst.

2. Anordnung nach Anspruch 1, dadurch gekennzeichnet, daß sie eine Einrichtung zur Bestimmung verfügbarer Adressen (MAD) enthält, die einen Eingang (Adr1) besitzt, der mit dem Ausgang des Addierers (ADD) verbunden ist und die einen Ausgang besitzt, der mit dem Einschreib-Adressen-Eingang des Verzögerungsspeichers (MT) verbunden ist, wobei die Anordnung an ihrem Ausgang eine Adresse (Hra) liefert, die entweder gleich der Adresse (Hta) ist, die an ihrem Ausgang (Adr1) vorhanden ist oder gleich einer Adresse, die der Adresse (Hta) am dichtesten benachbart ist, und die so beschaffen ist, daß sie einer Zone des Verzögerungsspeichers (MT) entspricht, in der kein Parameter gespeichert ist.

3. Anordnung nach Anspruch 1 oder 2, dadurch gekennzeichnet, daß der in der zum Einschreiben-adressierten Zone des Speichers (MT) gespeicherte Parameter die Nummer des virtuellen Schaltkreises (Vci) ist, zu dem die Eingangs-Zelle gehört und die im Etikett der Zelle enthalten ist.

4. Anordnung nach einem der vorhergehenden Ansprüche, dadurch gekennzeichnet, daß das Verzögerungs-Multiplett (Dt) durch einen Steuerspeicher (Mtrad) an den Ausgang geliefert wird, der so viele adressierbare Zonen enthält wie das Verbindungssystem virtuelle Schaltkreise verarbeiten kann, wobei jede Zone des Speichers (Mtrad) durch einen Parameter zum Lesen adressiert wird, der für den virtuellen Schaltkreis charakteristisch ist, zu dem die Eingangs-Zelle gehört, die in diesem Moment am Adressiereingang vorhanden ist, um am Ausgang des Speichers das entsprechende Verzögerungs-Multiplett (Dt) liefern zu können.

5. Anordnung nach Anspruch 4, dadurch gekennzeichnet, daß der Parameter, der den Steuerspeicher (Mtrad) adressiert, die Nummer des virtuellen Schaltkreises ist, zu dem die Eingangs-Zelle gehört.

6. Anordnung nach Anspruch 4 oder 5, dadurch gekennzeichnet, daß der Parameter, der in der zum Einschreiben adressierten Zone des Verzögerungsspeichers (MT) gespeichert ist, eine in einer Zone des Steuerspeichers (Mtrad) unter einer Adresse gespeicherte Dateneingabe ist, die einer Nummer des gegebenen virtuellen Schaltkreises entspricht.

7. Anordnung nach Anspruch 4, 5 oder 6, dadurch gekennzeichnet, daß das Verzögerungsdauer-Multiplett (Dt) durch eine Steuereinheit (UCC) in eine Zone des Steuerspeichers (Mtrad) geladen wird, dessen Adresse gleich der Nummer des entsprechenden virtuellen Schaltkreises ist.

8. Anordnung nach einem der Ansprüche 4 bis 7, dadurch gekennzeichnet, daß der Steuerspeicher (Mtrad) für jede adressierte Zone ein Validations-Bit (V) an den Ausgang liefert, das an einen Steuereingang (Vale) des Verzögerungsspeichers (MT) geliefert wird, entweder um das Einschreiben in den Verzögerungsspeicher (MT) zuzulassen, wenn das Bit aktiv ist oder um das Einschreiben zu unterbinden, wenn es inaktiv ist.

9. Anordnung nach einem der vorhergehenden Ansprüche, dadurch gekennzeichnet, daß das Etikett (Vci) der Eingangs-Zelle ein Identifikations-Bit (ACT) enthält, das an einen Eingang des Zeitsteuerspeichers (Vale) geliefert wird, entweder um das Einschreiben in diesen Speicher (MT) zuzulassen, wenn das Bit aktiv ist oder um das Einschreiben zu unterbinden, wenn es inaktiv ist.

## Claims

1. A device for triggering multiple timing processes, consisting of an input at which is supplied, at each time element of a clock, a cell from an asynchronous time-switching communication system, referred to as the incoming cell, the said cell belonging to a virtual communications circuit bearing a number which is stored in the label of the said cell, characterised by the fact that it consists of a timing memory (MT) of the random-access type, having a multiplicity of addressable areas in which zero or inactive bytes are normally stored, the said memory (MT) consisting of: A data input (ED) in order to be able to store, in a write-addressed area, a parameter which is associated with a characteristic of the virtual circuit to which the incoming cell belongs which is present, at that moment, at the input of the memory; and a data output (SD) in order to be able to deliver the contents of the area of the said memory which is addressed by reading, the said memory (MT) being addressed alternatively by writing by a byte (Hta, Hra) delivered by an adder (ADD) with two inputs, one of which is connected to a timebase (BT), in order to receive a that point a byte (Hl) representing local time, and the other receiving a timing duration byte (Dt) associated with a characteristic of the virtual circuit to which the incoming cell belongs, and, by reading by the said byte (Hl) representing the local time, the presence is established at the output (SD) of the said memory (MT) of a parameter, which results in the triggering of an action, while the presence of an inactive byte does not engender any action.

2. A device according to Claim 1, characterised by the fact that it consists of a device for determining the presence of available addresses (MAD), comprising an input (Adr1) associated with the output of the said adder (ADD) and an output associated with the write-address input of the said timing memory (MT), the said device supplying, at its output, an address (Hra) which is equal either to the address (Hta) present at its input (Adr1), or to the closest adjacent address to the said address (Hta), and which is such that it corresponds to an area of the timing memory (MT) in which no parameter has been stored.

3. A device according to Claims 1 or 2, characterised by the fact that the said parameter stored in the write-addressed area of the said memory (MT) is the number of the virtual circuit (Vci) to which the said incoming cell belongs, and which is contained in the label of the said cell.

4. A device according to one of the foregoing Claims, characterised by the fact that the timing duration byte (Dt) is delivered, at its output, by a command memory (Mtrad) consisting of as many addressable areas as the communications system is capable of managing virtual circuits, each area of the said memory (Mtrad) being write-addressed by a characteristic parameter of the virtual circuit to which the incoming cell belongs, present at that moment at its addressing input, in order to be able to deliver at the output of the said memory the corresponding timing byte (Dt).

5. A device according to Claim 4, characterised by the fact that the said parameter which addresses the said command memory (Mtrad) is the number of the virtual circuit to which the said incoming cell belongs.

6. A device according to Claims 4 or 5, characterised by the fact that the said parameter which is stored in the write-addressed area of the timing memory (MT) is a data item stored in an area of the said command memory (Mtrad) at an address corresponding to the number of a given virtual circuit.

7. A device according to Claims 4, 5, or 6, characterised by the fact that the timing duration byte (Dt) is loaded, by a command unit (UCC), into an area of the said command memory (Mtrad), of which the address is equal to the number of the corresponding virtual circuit.

8. A device according to one of Claims 4 to 7, characterised by the fact that the command memory (Mtrad) delivers, at its output, for each area addressed, a validation bit (V), which is supplied to a command input (Vale) of the timer memory (MT), either to authorise the writing into the said timer memory (MT) when the said bit is active, or to prevent this writing process when it is inactive.

9. A device according to one of the foregoing Claims, characterised by the fact that the label (Vci) of the incoming cell comprises an identification bit (ACT) which is supplied at an input of the timer memory (Vale), either to authorise writing into this memory (MT) when the said bit is active, or to prevent this writing process when it is inactive.
